# EUROPEAN PATENT APPLICATION

(11) **EP 2 330 151 A1**
(43) Date of publication of application: **08.06.2011**
(21) Application number: 09178019.7
(22) Date of filing: 04.12.2009
(51) Int. Cl.: C08K 5/49, B32B 17/10, C08K 3/38, C09D 4/00, C09J 4/00

(54) **IR_shielding radiation curable compositions**

(71) Applicant: CYTEC SURFACE SPECIALTIES, S.A., 1070 Brussels (BE)
(72) Inventor: Vargas, Carol Anne, Acworth, GA 30101 (US); Shaw, Jonathan, Acworth, GA 30101 (US); Van den Bergen, Hugues, 1620, Drogenbos (BE)
(74) Representative: Destryker, Elise Martine

(57) **Abstract**

The invention relates to a radiation curable compositions comprising comprising at least one radiation curable (meth)acrylated oligomer having a number average molecular weight Mn of at least 1000, at least one at least one radiation curable monomer and at least one IR shielding component comprising hexaboride particles and an organic dispersant and their use to make solar control glass laminates.

## Description

The present invention relates to radiation curable compositions as well as their use for making IR-shielding glass laminates and the glass laminates thereby obtained.

"Low E" or low emissivity windows are used in buildings to reduce energy costs and meet relevant building energy codes by either keeping heat inside in cold climates or keeping heat from sunlight out to reduce cooling costs in warm climates. The reduction of solar heat gain in warm climates is achieved by blocking the portion of the solar spectrum responsible for heating the interior of the building. This portion corresponds to the near-IR region of the visible light spectrum between 700 and 2500 nm in wavelength. The most widely-used commercial technologies employ glass that is either tinted or doped to block IR energy or glass that is coated with layers of metal or metal oxides. The coatings are considered spectrally selective if they block the near-IR portion of incident sunlight while transmitting most of the visible light portion of the spectrum. The most advanced spectrally selective coatings are vacuum-sputtered coatings that are applied to glass post-process. These coatings have several drawbacks, the main one being that they are easily damaged in handling and window manufacture and cannot be exposed to open air. Thus they must be sealed into an insulated glazing of two glass panes separated by an air space, where the coating is on the interior surface of one of the glass panes. Low E coatings can also be applied during the glass firing process, but these pyrolytic glass coatings are generally not as spectrally selective and do not block as much of the IR portion of sunlight. They also can be damaged when contacted by metal objects, though they are not as fragile as the sputtered-on coatings.

Radiation curable coating solutions for forming films cutting off solar heat radiation on a sheet of glass have been described in US2008/0102282 and in Sumitomo Metal Mining patent US6319613. These solutions comprise a combination of ultrafine particles of hexaborides and ultrafine particles of ATO (antimony-containing tin oxide) or ITO (tin-containing indium oxide). However as stated in Sumitomo Metal Mining patent US 7238418 the coating compositions described in this previous patent are not stable and the particles tend to agglomerate to cause a sediment. As such they are not suitable for being used for making laminated glasses. US7238418 describes heat radiation shielding component dispersions comprising fine particles of hexaborides and a polymer dispersant which do not have these drawbacks. US7238418 further describes the use of such dispersions in combination with thermoplastic resins or its use for making liquid coating compositions. These liquid coating compositions are made by adding to the dispersion a solvent, such as toluene, and combine them with a binder resin. Example 6 more specifically describes the combination with a UV curable acrylic resin.

These radiation curable compositions can be coated on a glass, dried and then cured under UV radiation. However these compositions are not suitable for making glass laminates, especially those produced by liquid cast-in-place resin polymerised in situ. In this technique, two glass panes are bond together by a double-sided adhesive tape that also functions as a distance holder. The thus created cavity between the two sheets is then filled up with a liquid resin. The liquid resin is then polymerised, the so-called "curing", by radiation or chemically by appropriate catalysts and accelerators. After completion of the polymerisation a solid interlayer is formed. Therefore there is still a need to find IR-shielded glass laminates which combine high impact resistance properties and IR shielding properties. Moreover these glasses should be easy to prepare and to handle and should be transparent.

Applicant has now found compositions which permit to overcome these problems.

The present invention therefore relates to a radiation curable composition comprising at least one radiation curable (meth)acrylated oligomer having a number average molecular weight Mn of at least 1000, at least one radiation curable monomer and at least one IR shielding component comprising hexaboride particles and an organic dispersant.

The term "(meth)acrylate" used in the present invention is meant to encompass both acrylate and methacrylate compounds, as well as mixtures thereof.

Preferred (meth)acrylated oligomers used in the composition according to the invention are those having a number average molecular weight Mn of from 1000 to 10000. Preferred are those having a Mn of at least 2000, especially those having a Mn of at least 4000. Preferred oligomers have a Mn of at most 8000. Preferred (meth)acrylated oligomers used in the composition according to the invention are those having a weight average molecular weight Mw of from 2000 to 30000. Preferred are those having a Mw of at least 3000, especially those having a Mw of at least 6000. Preferred oligomers have a Mw of at most 20000.

The number average molecular weight Mn and weight average molecular weight Mw are measured by GPC (in THF on a 3xPLgel 5µm Mixed-D LS 300x7.5mm column MW range 162 to 377400 g/mol calibrated with polystyrenes standards, at 40 °C).

Preferred oligomers are selected from urethane (meth)acrylates, polyester (meth)acrylates and epoxy (meth)acrylates and mixtures thereof, more particularly from flexible urethane and/or epoxy (meth)acrylates having an elongation at break of 10 to 500 %, more preferably 50 to 300 %. The elongation at break is measured by tensile testing of a radiation-cured thin free-film of the oligomer according to ASTM D 638.

Urethane(meth)acrylates are well known in the art and commercially available products. Suitable urethane (meth)acrylates have for example been described in WO 2004/037599. Examples of a suitable urethane(meth)acrylates are commercially available from Cytec Surface Specialties.

Epoxy(meth)acrylates,i.e. (meth)acrylate esters of epoxy resins, are also well known in the art. Suitable epoxy (meth)acrylates have for example been described in Technical Conference Proceedings - RadTech 2002: The Premier UV/EB, Conference & Exhibition, Indianapolis, IN, United States, Apr. 28-May 1, 2002 (2002), 171-181 Publisher: RadTech International North America, Chevy Chase, Md.. Examples of a suitable epoxy(meth)acrylates are those commercialized under the names of EBECRYL^{®}3708 and EBECRYL^{®}3302.

Urethane (meth)acrylates, especially aliphatic urethane acrylates are particularly preferred. The total quantity of oligomer(s) in the composition is generally from 5 to 90 % by weight. The total quantity of oligomer(s) is preferably at least 10 % by weight, more preferably at least 15 % by weight. The quantity of oligomer(s) preferably does not exceed 80 % by weight, more preferably it does not exceed 70 % by weight.

The monomers are generally mono-, di-, tri- and/or tetra-(meth)acrylates. Suitable monomers include (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, n- hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(-2-ethoxyethoxy)ethyl(meth)acrylate, 2-butoxyethyl (meth)acrylate, cardura (meth)acrylate, N-vinyl pyrrolidone, 1,6-hexanediol di(meth)acrylate, pentaerythritoltri(meth)acrylate, trimethylolpropanetri(meth)acrylate, phenylglycidylether(meth)acrylate, and the oxyethylated or/and oxypropylated derivatives thereof. Preferred are mono(meth)acrylates, especially acrylic acid, butylacrylate, methylmethacrylate, 2-ethylhexylacrylate and isobornylacrylate. More preferred are methylmethacrylate, n-butylacrylate, acrylic acid and 2-ethylhexylacrylate.

The total quantity of monomer(s) used in the composition is generally from 5 to 95 % by weight. The quantity of monomer(s) is preferably at least 10 % by weight, more preferably at least 20 %, and most preferably at least 30 %, by weight. The total quantity of monomer(s) does preferably not exceed 90 % by weight, more preferably it does not exceed 85 % by weight of the total weight.

The radiation curable composition generally contains from 0.001 to 10 % by weight of IR shielding component. The composition preferably comprises at least 0.01 % by weight and more preferably at least 0.03 % by weight of IR shielding component. The total quantity of IR shielding component does preferably not exceed 5 % by weight, more preferably it does not exceed 1 % by weight. Most preferably it does not exceed 0.5 % by weight.

By IR shielding component is meant to designate any product that blocks at least part of the near-IR portion of incident sunlight while transmitting most of the visible light portion of the spectrum.

The IR shielding component generally contains at least 0.1 % by weight of particles of at least one hexaboride of formula XB₆, wherein X is selected from Y, La, Ce, Pr, Nd, Sm, Eu, Gd, Tb, Dy, Ho, Er, Tm, Yb, Lu, Sr and Ca. The hexaboride is preferably LaB₆. The IR shielding component preferably contains from 1 % to 95 % by weight of particles of at least one hexaboride, more preferably from 5 to 50 % by weight. The average particle size of the hexaboride is generally less than 1000 nm, preferably less than 200 nm.

The IR shielding component generally contains at least 1 % by weight of organic dispersant. Organic dispersants are preferably selected from polymer type dispersants, such as polyacrylate type dispersants, polyurethane type dispersants, polycarbonate type dispersants, polyether type dispersants, polyester type dispersants as well as copolymers and mixtures thereof. The IR shielding component preferably contains from 5 % to 99 % by weight of organic dispersant, more preferably from 50 to 95 % by weight.

The IR shielding component can also contain other ingredients, for example other oxides such as indium, tin or antimony or any combinations thereof, such as tin containing indium oxide (ITO), antimony containing tin oxide (ATO), SiO₂, ZrO₂, TiO₂, Al₂O₃, MgO and mixtures thereof. These compounds may be added as separate particles or may by used for the surface treatment of the hexaboride particles. The IR shielding component preferably further comprises from 1 % to 50 %, more preferably from 5 to 30 %, by weight of one or more oxides, more preferably ZrO₂.

The composition according to the present invention preferably also contains at least one phosphorous-containing dispersing agent. The phosphorous-containing dispersing agent enables to provide compositions which remain stable over time. Compositions comprising this phosphorous containing dispersing agent permit to obtain particularly clear laminates with minimal haze.

The phosphorous containing dispersing agent is preferably selected from organic derivatives of phosphinic acid, phosphonic acid or phosphoric acid. A preferred group of phosphorous containing dispersing agent are alkylphosphate esters, aryl phosphate esters, alkylarylphosphate esters, alkylphosphonate esters, aryl phosphonate esters and alkylarylphosphonate esters. Particularly preferred are polyarylphosphate esters, more preferably phosphate esters derived from bisphenol A such as bisphenol A bis(diphenyl phosphate)

A particularly preferred group of the phosphorous containing dispersing agents are those of formula (1) 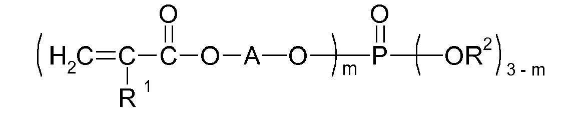 wherein
each R¹ is independently hydrogen or an alkyl group having from 1 to 8 carbon atoms, more preferably hydrogen or methyl;
each R² is independently selected from the group consisting of hydrogen, an alkyl group having from 1 to 8 carbon atoms, and a haloalkyl group having from 1 to 8 carbon atoms, more preferably hydrogen;
each A is independently an alkylene group containing from 1 to 9 carbon atoms, optionally containing 1 to 3 ether and/or -OC(O)- bridges, more preferably an alkylene comprising 2 to 6 carbon atoms, most preferably an ethylene ; and
m is 1 to 3.

By alkylene containing an ether bridge is meant an alkylene radical wherein a carbon atom is replaced by an oxygen atom, forming a group such as -C-O-C-. By alkylene containing a -OC(O)- bridge is meant an alkylene radical wherein a 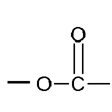 group is present between 2 carbon atoms, forming a group of formula

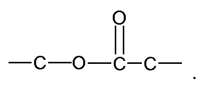

Particularly preferred are the reaction products of P₂O₅ with hydroxy group containing (meth)acrylates, especially with 2-hydroxyethyl(meth)acrylate.

Another preferred group of the phosphorous containing dispersing agents are cyclic phosphonate esters responding to formula (II) 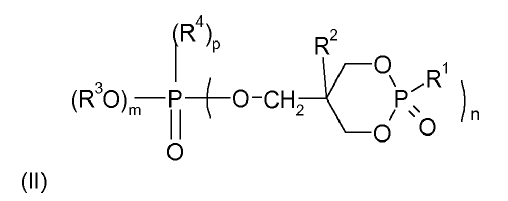 wherein n is 1, 2 or 3, m is 0, 1 or 2 and p is 0 or 1 with the proviso that n+m+p=3, R¹ represents an alkyl comprising from 1 to 4 carbon atoms, optionally substituted by a hydroxyl group, R² represents an alkyl comprising from 1 to 4 carbon atoms, R³ and R⁴, each independently, represents an alkyl comprising from 1 to 8 carbon atoms, phenyl, optionally substituted by one or more halogen or hydroxyl, tolyl, xylyl, benzyl, phenethyl, hydroxyethyl, phenoxyethyl or dibromophenoxyethyl. Prefered are compounds of formula (II) wherein n is 1 or 2, m is 0 or 1 and p is 1, especially those wherein R¹, R², R³ and R⁴, each independently, are selected from alkyl groups comprising 1 to 4 carbon atoms. Particularly preferred are those wherein R² is ethyl and R¹, R³ and R⁴ are methyl.

Especially preferred are compounds responding to formula (III) and (IV) as well as mixtures thereof

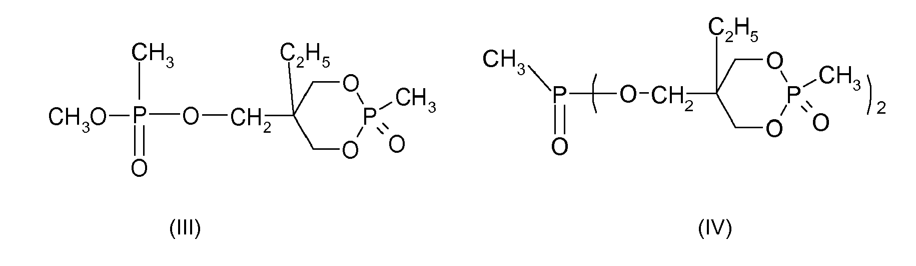

The radiation curable composition preferably contains from 0.001 to 10 % by weight of phosphorous containing dispersing agent. The composition preferably comprises at least 0.01 % by weight and more preferably at least 0.03 % by weight of phosphorous containing dispersing agent. The total quantity of phosphorous containing dispersing agent does preferably not exceed 5 % by weight, more preferably it does not exceed 1 % by weight. Most preferably it does not exceed 0.5 % by weight.

The composition according to the invention typically contains from 0 to 10 % by weight of at least one photoinitiator. Preferably, the amount of photoinitiator in the composition is comprised between 0.02 and 4 % by weight. The composition according to the present invention preferably contains between 0.01 and 2 % by weight of acyl phosphine type photoinitiator, such as 2,4,6-trimethylbenzoyl diphenyl phosphine oxide and phenyl bis(2,4,6-trimethylbenzoyl) phosphine oxide. The composition according to the present invention preferably contains between 0.01 and 3 % by weight of α-hydroxyketone type photoinitiator, such as 1-hydroxy-cyclohexyl-phenyl-ketone. The composition according to the invention advantageously contains both an acyl phoshine type photoinitiator, preferably selected from 2,4,6-trimethylbenzoyl diphenyl phosphine oxide and phenyl bis(2,4,6-trimethylbenzoyl) phosphine oxide and a α-hydroxyketone type photoinitiator, preferably 1-hydroxy-cyclohexyl-phenyl-ketone, in a weight ratio of 1:4 to 3:1, more preferably in a weight ratio of 1:3 to 1:1. Such compositions permit to obtain laminates of excellent appearance and outstanding mechanical properties.

The radiation curable composition according to the present invention can also contain other compounds, such as adhesion promoters, stabilizers, antioxidants and UV-absorbers. The amount of other compounds usually does not exceed 5 % by weight. Preferably, the composition comprises from 0.01 to 3% by weight of adhesion promotor, especially those selected from silanes.

The radiation curable composition according to the invention is preferably prepared by adding first the IR shielding component to one or more of the monomer(s) or to a part of these monomers until a single phase is obtained, optionally adding the phosphorous containing dispersing agent, and then adding this mixture to the other ingredients of the composition. The mixing is generally done at a temperature from 5 to 100 °C.

The radiation curable composition generally have a viscosity at 25 °C of from 1 to 10000 mPas, preferably of from 10 to 1000 mPas, more preferably from 10 to 250 mPas.

The radiation curable compositions according to the present invention permit to to produce transparent layers. The composition according to the invention shows improved IR shielding properties, high impact resistance, acoustic insulation, ageing resistance and adhesion on laminates.

The radiation curable compositions according to the invention are therefore suitable for a large number of applications, such as for making solar control glass laminates, polycarbonate laminates, UV curable adhesives and coatings.

The radiation curable compositions according to the invention are particular useful for making solar control laminates, especially glass laminates.

By glass laminates is understood laminates comprising at least one glass pane.

In the present description, the term "glass" is used to designate objects made of glass or of glass appearance. Glass appearance objects such as polycarbonate panels can be used but are less preferred because of their poor behavior in case of fire. The glass objects can be made of ordinary soda lime glass (float glass), whether annealed or not, or of special glass such as borosilicate glass (whether tempered or not) or ceramic glasses, and wired glass.

The present invention also provides a method of producing a laminate according to the invention comprising the steps of (i) providing a radiation curable composition as described here above; (ii) place the radiation curable composition between two panes, at least one of which is glass, and (iii) let the composition cure to form the polymer which forms the interlayer between the panes. The steps (i), (ii) and (iii) involved into the claimed method are not necessarily distinct, successive, separated steps. In a preferred embodiment, the curable composition can be placed between the panes, allowed to cure by irradiation under UV-light, so as to form a laminate comprising a cured composition layer ("interlayer") bonding the panes together.

The composition is more preferably "cast" in a casting cell comprising two opposed outer plies, spaced apart and separated from one another by a peripheral spacer between them, and cured in the cell. Such techniques are well known and are described in, for example, in EP-A-0200394. Curing is preferably done by irradiation, more preferably by UV light, especially by the action of UV light of low intensity. Typically an intensity of 1 to 10, preferably of 1.5 to 2.5, mW/cm² is used. Typically, the residence time in the UV oven is from 5 to 60, preferably from 15 to 30 minutes.

According to a variant of the invention, multi-sheet laminates, i.e. laminates comprising more than one glass pane and/or more than one other pane may be used. The glass panes used in the present invention may be of the same nature or different. In these multi-sheets laminates, comprising several laminates bound to each other with an interlayer, each interlayer may be of the same or different composition, IR shielding or not.

The present invention also relates to glass laminates comprising at least one interlayer obtained from the composition according to the invention. The laminates according to the invention present have significantly improved solar control properties as well as impact resistance and safety impact performance. The laminates according to the invention are easy to handle.

The present invention is illustrated by the following, non-limiting examples.

Compositions of Example 1 to 5 have been prepared by adding a commercially available nanoparticle powder KHDS-872G2 (comprising 10 % of LaB6, 15% of ZrO2 and 75% of organic dispersing agents) from Sumitomo to methyl methacrylate (MMA) at 30 °C and stirring until the particles were no longer visible and the haze was measured as being less than 1.1. Then a phosphoric acid ester acrylate (PA) was added and the mixture was further stirred for an additional 30 minutes. Then this mixture was further mixed with a photoinitiator P11. The composition is described in Table 1 here below.

Then this mixture was further mixed with the urethane acrylate UA and the other compounds as described in Table 2 here below during 30 minutes.

Compositions of Example 6 and 7 have been prepared by using a dispersion comprising 20% of nano dispersion having the same composition as here above in MMA.

Unless otherwise specified the amounts of the different compounds in the final formulation are given in g.

**Table 1.**

| | 1 | 2 | 3 | 4 | 5 |
|---|---|---|---|---|---|
| MMA | 90.7 | 362.8 | 369.6 | 112.8 | 112.8 |
| Nano | 1.0 | 4.004 | 3.9933 | 1.2 | 1.2 |
| PA | 5.0 | 19 | 19.4 | 6.0 | 6.0 |
| PI1 | 3.3 | 13.2 | 6.4 | | |

**Table 2**

| | 1 | 2 | 3 | 4 | 5 | 6 | 7 |
|---|---|---|---|---|---|---|---|
| Nano mixture | 33.00 | 90 | 90 | 10.80 | 6.00 | 0.3 | 0.3 |
| UA1 | 316.0 | 900 | 900 | 108.00 | 60.00 | 60.00 | 40.0 |
| UA2 | | | | | | | 20.0 |
| MMA | 188.18 | 495 | 493.5 | 58.95 | 32.7 | 38.0 | 38.0 |
| Silane additive | 4.85 | 15 | 15 | 1.80 | 1.00 | 1.0 | 1.0 |
| PI1 | | | | 0.09 | | 0.5 | 0.5 |
| P12 | 0.97 | | 1.5 | 0.36 | 0.30 | 0.2 | 0.2 |

| | | | | | | | |
|---|---|---|---|---|---|---|---|
| UA1 is an aliphatic difunctional high elongation urethane acrylate having a Mn of about 5000. UA2 is an aliphatic difunctional high elongation urethane acrylate having a Mn of 1700. IP1 is a photo initiator commercialized under the name of ADDITOL®TPO. IP2 is a photo initiator commercialized under the name of ADDITOL®CPK. PA is an phosphoric acid ester acrylate obtained from the reaction of P205 with 2-hydroxyethyl methacrylate. | | | | | | | |

The properties of these compositions were measured and are reported in the Table 3. Viscosities were measured using a cone and plate viscosimeter (Modular Compact Rheometer MCR-100; used cone : cone CP50-1; shear rate 20s⁻¹).

**Table 3**

| | 1 | 2 | 3 | 4 | 5 | 6 | 7 |
|---|---|---|---|---|---|---|---|
| Aspect | Green solution | Green solution | Green solution | Green solution | Green solution | Green solution | Hazy green solution |
| Viscosity @25°C | 108 | 121 | 115 | 97 | 104 | 122 | 117 |

Glass laminates were made by bounding one lite of clear annealed, float glass to either another lite of clear annealed, float glass or a lite of tinted glass or coated glass. The lites were adhered to each other using double-sided tape of nominal 0.120" thickness to create a cavity between the two lites of glass. The UV curable composition as described in Example 1 of the aforementioned tables was introduced into the cavity. Curing was done by exposing the samples to low intensity UV-A energy (1.5 - 2.5 mW/cm² for a period of 30 minutes. The clear lite of glass was always oriented closer to the UV lamps.

The optical properties of the laminates this formed were determined by Optical Data Associates and converted to solar heat gain coefficients (SGHC) using WINDOW5 from LBNL. The results are presented in Table 4. As can been seen several of the laminates meet the SHGC level of < 0.4 prescribed by the building code.

**Table 4.**

| Laminate | Lite 1 | Lite 2 (glass orientation) | Haze | Tvis | SHGC |
|---|---|---|---|---|---|
| 1 | 5 mm clear float glass | 6 mm clr Eclipse Adv. (1) | 3.10 | 0.479 | 0.42 |
| 2 | 5 mm clear float glass | 6 mm clr Eclipse Adv. (2) | 3.57 | 0.538 | 0.46 |
| 3 | 5 mm clear float glass | 6 mm grey Eclipse Adv. (1) | 2.97 | 0.225 | 0.33 |
| 4 | 5 mm clear float glass | 6 mm grey Eclipse Adv. (2) | 2.64 | 0.256 | 0.38 |
| 5 | 5 mm clear float glass | 6 mm Evergreen Eclipse Adv. (1) | 3.01 | 0.343 | 0.33 |
| 6 | 5 mm clear float glass | 6 mm Evergreen Eclipse Adv. (2) | 2.59 | 0.391 | 0.39 |
| 7 | 5 mm clear float glass | 6 mm Bluegreen Eclipse Adv. (1) | 2.86 | 0.392 | 0.36 |
| 8 | 5 mm clear float glass | 6 mm Bluegreen Eclipse Adv. (2) | 3.36 | 0.444 | 0.41 |
| 9 | 5 mm clear float glass | 6 mm Arctic Blue Eclipse Adv. (1) | 3.36 | 0.277 | 0.33 |
| 10 | 5 mm clear float glass | 6 mm Arctic Blue Eclipse Adv. (2) | 2.74 | 0.313 | 0.38 |

| | | | | | |
|---|---|---|---|---|---|
| (1) - coated glass is the outboard lite in the laminate (2) - coated glass is the inboard lite in the laminate | | | | | |

The solar control laminates efficiently block the IP portion (700 nm and higher) while allowing 22.5 to 53.8 % of the visible light (400 to 700 nm) to be transmitted.

## Claims

1. Radiation curable composition comprising comprising at least one radiation curable (meth)acrylated oligomer having a number average molecular weight Mn of at least 1000, at least one at least one radiation curable monomer and at least one IR shielding component comprising hexaboride particles and an organic dispersant.

2. Radiation curable composition according to claim 1 comprising from 0.001 to 10 % by weight of IR shielding component.

3. Radiation curable composition according to claim 2 wherein the IR shielding component generally contains at least 0.1 % by weight of particles of at least one hexaboride of formula XB₆, wherein X is selected from Y, La, Ce, Pr, Nd, Sm, Eu, Gd, Tb, Dy, Ho, Er, Tm, Yb, Lu, Sr and Ca, and at least 1 % by weight of organic dispersant.

4. Radiation curable composition according to any preceding claim comprising from 5 to 95 % by weight of at least one radiation curable monomer selected from mono-, di-, tri- and/or tetra-(meth)acrylates.

5. Radiation curable composition according to any preceding claim comprising from 5 to 90 % by weight of at least one radiation curable (meth)acrylated oligomer selected from urethane (meth)acrylates.

6. Radiation curable composition according to any preceding claim comprising at least one phosphorous-containing dispersing agent.

7. Radiation curable composition according to claim 6 wherein the phosphorous containing dispersing agent corresponds to formula (1) 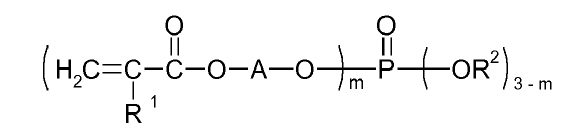 wherein
each R¹ is independently hydrogen or an alkyl group having from 1 to 8 carbon atoms, more preferably hydrogen or methyl; each R² is independently selected from the group consisting of hydrogen, an alkyl group having from 1 to 8 carbon atoms, and a haloalkyl group having from 1 to 8 carbon atoms, more preferably hydrogen; each A is independently an alkylene group containing from 1 to 9 carbon atoms, optionally containing 1 to 3 ether and/or -OC(O)- bridges, more preferably an alkylene comprising 2 to 6 carbon atoms, most preferably an ethylene ; and m is 1 to 3.

8. Radiation curable composition according to claim 7, wherein the phosphorous containing dispersing agent is selected from the reaction products of P₂O₅ with hydroxy group containing (meth)acrylates.

9. Radiation curable composition according to any preceding claim comprising between 0.01 and 2 % by weight of acyl phosphine type photoinitiator and/or between 0.01 and 3 % by weight of α-hydroxyketone type photoinitiator.

10. Method of producing a laminate comprising the steps of (i) providing a radiation curable composition according to any of claims 1 to 9; (ii) place the composition between two panes, at least one of which is glass, and (iii) let the composition cure to form the polymer which forms the interlayer between the panes.

11. Glass laminates comprising at least one interlayer obtained from the radiation curable composition according to any of claims 1 to 9 and/or from the method according to claim 10.
